# EUROPEAN PATENT APPLICATION

(11) **EP 2 287 575 A1**
(43) Date of publication of application: **23.02.2011**
(21) Application number: 09746527.2
(22) Date of filing: 07.05.2009
(51) Int. Cl.: G01J 3/18, G02B 7/00

(54) **SPECTRAL MODULE**

(30) Priority: 15.05.2008 JP 2008128687; 05.12.2008 JP 2008311081
(71) Applicant: Hamamatsu Photonics K.K., Hamamatsu-shi, Shizuoka 435-8558 (JP)
(72) Inventor: SHIBAYAMA Katsumi, Hamamatsu-shi Shizuoka 435-8558 (JP)
(74) Representative: HOFFMANN EITLE
(86) International application number: PCT/JP2009/058637
(87) International publication number: WO 2009/139320

(57) **Abstract**

In a spectral module 1, a photodetector 5 is mounted to an intermediate substrate 81, whereby an optical resin agent 63 interposed between a front face 2a of a substrate 2 and the intermediate substrate 81 is prevented from intruding into a light transmitting hole 50 of the photodetector 5. This can prevent refraction, scattering, and the like from occurring and make light L1 appropriately enter a spectroscopic unit 4. In addition, the intermediate substrate 81 has a volume smaller than that of the substrate 2, whereby the intermediate substrate 81 expands/shrinks in a state more similar to the photodetector 5 than the substrate 2 when the temperature in the surroundings of the spectral module 1 changes. Hence, bump connections of the photodetector 5 can more reliably be prevented from breaking upon changes in the temperature in the surroundings of the spectral module 1 than when the photodetector 5 is mounted to the substrate 2.

## Description

### Technical Field

The present invention relates to a spectral module which spectrally resolves and detects light.

### Background Art

As conventional spectral modules, those described in Patent Literatures 1 to 3 have been known, for example. Patent Literature 1 discloses a spectral module comprising a main unit which transmits light therethrough, a spectroscopic unit which spectrally resolves light having entered the main unit from a predetermined surface side of the main unit and reflects the light toward the predetermined surface, and a photodetector for detecting the light spectrally resolved and reflected by the spectroscopic unit, while the photodetector is formed with a light transmitting hole through which the light proceeding to the spectroscopic unit passes. Such a spectral module can prevent deviations from occurring in the relative positional relationship between the light transmitting hole and a photodetecting section of the photodetector.

### Citation List

### Patent Literature

Patent Literature 1: Japanese Patent Application Laid-Open No. 2004-354176
Patent Literature 2: Japanese Patent Application Laid-Open No. 2000-65642
Patent Literature 3: Japanese Patent Application Laid-Open No. 4-294223

### Summary of Invention

### Technical Problem

Meanwhile, since the light entering the main unit may be refracted, scattered, and so forth if a resin agent for attaching the photodetector to the main unit intrudes into the light transmitting hole of the photodetector, it is very important for a spectral module such as the one mentioned above to prevent refraction, scattering, and the like from occurring and make the light appropriately enter the main unit.

In view of such circumstances, it is an object of the present invention to provide a spectral module which can make light appropriately enter the main unit.

### Solution to Problem

For achieving the above-mentioned object, the spectral module in accordance with the present invention comprises a main unit for transmitting light therethrough; a spectroscopic unit for spectrally resolving light having entered the main unit from a predetermined surface side of the main unit and reflecting the light toward the predetermined surface; a photodetector for detecting the light spectrally resolved by the spectroscopic unit; an intermediate substrate, disposed between the predetermined surface and the photodetector, for transmitting therethrough light proceeding to the spectroscopic unit and light proceeding from the spectroscopic unit to a photodetecting section of the photodetector; and an optical resin agent interposed between the predetermined surface and the intermediate substrate; wherein the intermediate substrate has a volume smaller than that of the main unit; and wherein the photodetector is formed with a light transmitting hole for transmitting therethrough the light proceeding to the spectroscopic unit, the photodetector being electrically connected by facedown bonding to a first lead provided with the intermediate substrate.

In this spectral module, since the photodetector is mounted to the intermediate substrate, the optical resin agent interposed between the predetermined surface of the main unit and the intermediate substrate is prevented from intruding into the light transmitting hole of the photodetector. Therefore, this spectral module can prevent refraction, scattering, and the like from occurring and make the light appropriately enter the main unit. In addition, since the volume of the intermediate substrate is smaller than that of the main unit, the intermediate substrate expands/shrinks in a state more similar to the photodetector than the main unit when the temperature in the surroundings of the spectral module changes. Hence, bump connections of the photodetector can more reliably be prevented from breaking upon changes in the temperature in the surroundings of the spectral module than when the photodetector is mounted to the main unit.

Preferably, in the spectral module in accordance with the present invention, a resin agent is disposed between the intermediate substrate and the photodetector in an area excluding optical paths of the light proceeding to the spectroscopic unit and the light proceeding from the spectroscopic unit to the photodetecting section. This structure can more reliably prevent bump connections of the photodetector from breaking by improving the connection strength between the intermediate substrate and the photodetector while preventing refraction, scattering, and the like from occurring in the light proceeding to the spectroscopic unit and the light proceeding from the spectroscopic unit to the photodetecting section.

Preferably, the spectral module in accordance with the present invention further comprises a wiring board attached to the predetermined surface, while the wiring board is formed with an opening for placing the intermediate substrate therein and provided with a second lead electrically connected to the first lead. This structure can block light from proceeding to the spectroscopic unit without passing through the light transmitting hole.

### Advantageous Effects of Invention

In the spectral module, the present invention prevents refraction, scattering, and the like from occurring and make light appropriately enter the main unit.

### Brief Description of Drawings

**[****Fig. 1****]** is a plan view of an embodiment of the spectral module in accordance with the present invention;
**[****Fig. 2****]** is a sectional view taken along the line II-II of Fig. 1;
**[****Fig. 3****]** is a bottom plan view of the spectral module of Fig. 1; and
**[****Fig. 4****]** is an enlarged sectional view of a main part of the spectral module of Fig. 1.

### Description of Embodiments

In the following, preferred embodiments of the present invention will be explained in detail with reference to the drawings. In the drawings, the same or equivalent parts will be referred to with the same signs while omitting their overlapping descriptions.

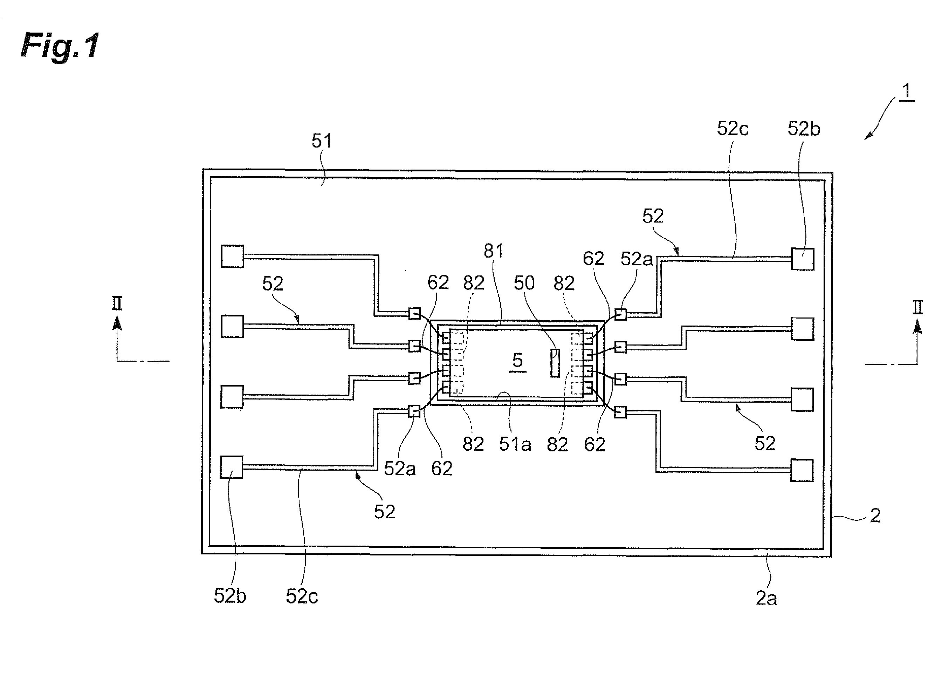

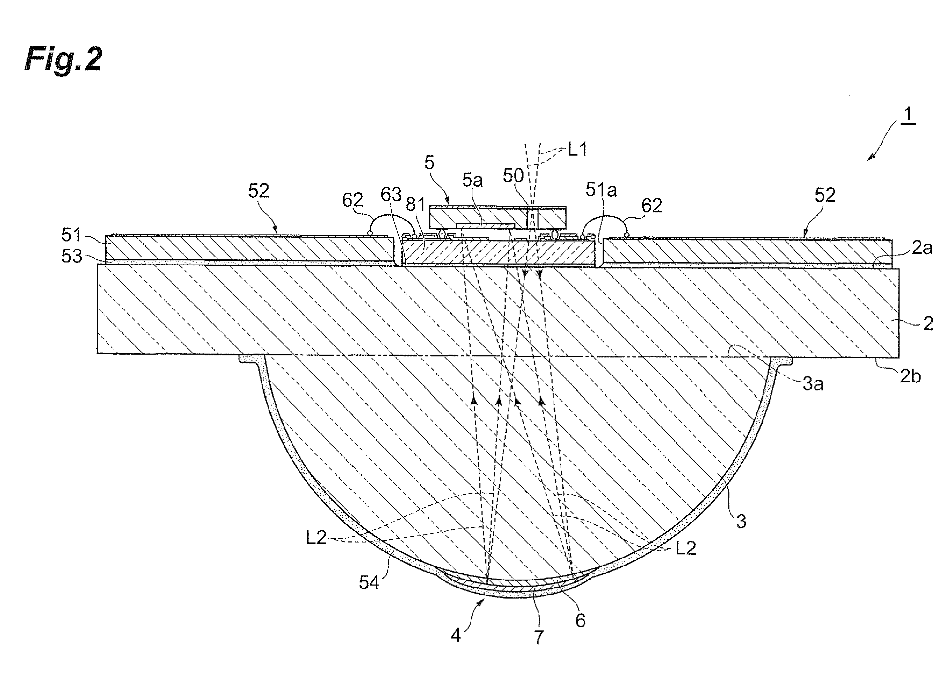

Fig. 1 is a plan view of an embodiment of the spectral module in accordance with the present invention, while Fig. 2 is a sectional view taken along the line II-II of Fig. 1. As illustrated in Figs. 1 and 2, this spectral module 1 comprises a substrate (main unit) 2 which transmits therethrough light L1 incident thereon from its front face (predetermined surface) 2a side, a lens unit (main unit) 3 which transmits the light L1 having entered the substrate 2, a spectroscopic unit 4 which spectrally resolves the light L1 having entered the lens unit 3 and reflects it toward the front face 2a, and a photodetector 5 which detects light L2 spectrally resolved by the spectroscopic unit 4. The spectral module 1 is a micro spectral module which spectrally resolves the light L1 with the spectroscopic unit 4 into the light L2 corresponding to a plurality of wavelengths and detects the light L2 with the photodetector 5, thereby measuring a wavelength distribution of the light L1, the intensity of a specific wavelength component, and the like.

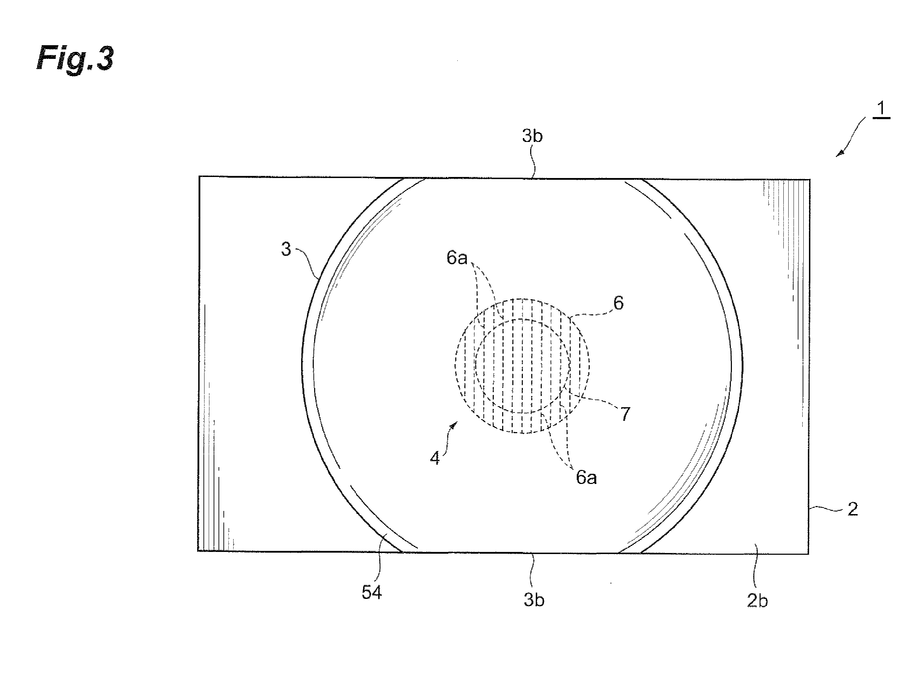

Fig. 3 is a bottom plan view of the spectral module of Fig. 1. As illustrated in Figs. 2 and 3, the substrate 2 is formed into a rectangular plate (e.g., with a full length of 15 to 20 mm, a full width of 11 to 12 mm, and a thickness of 1 to 3 mm), while the lens unit 3 has such a form that a semispherical lens is cut off by two planes substantially parallel to each other and substantially orthogonal to its bottom face 3a so as to form side faces 3b (e.g., the form with a radius of 6 to 10 mm, a height of 5 to 8 mm, and the bottom face 3a having a full length of 12 to 18 mm and a full width (distance between the side faces 3b) of 6 to 10 mm). The substrate 2 and the lens unit 3 are integrally formed from any of light transmitting glass materials such as BK7, Pyrex (registered trademark), and silica, plastics, and the like such that the rear face 2b of the substrate 2 and the bottom face 3 a of the lens unit 3 coincide with each other. The lens form may be either spherical or aspherical.

As illustrated in Figs. 1 and 2, a wiring board 51 shaped like a rectangular plate having an opening 51 a with a rectangular cross section in which an intermediate substrate 81 shaped like a rectangular plate is placed is bonded to the front face 2a of the substrate 2 with a resin agent 53. The wiring board 51 is provided with leads (second leads) 52 made of a metal material. The leads 52 include a plurality of pad units 52a arranged about the opening 51a, a plurality of pad units 52b arranged in both longitudinal end portions of the wiring board 51, and a plurality of connection units 52c for connecting the corresponding pad units 52a, 52b to each other.

As illustrated in Figs. 2 and 3, the spectroscopic unit 4 is a reflection-type grating having a diffracting layer 6 formed on the outer surface of the lens unit 3, a reflecting layer 7 formed on the outer surface of the diffracting layer 6, and a passivation layer 54 covering the outer surfaces of the diffracting layer 6, reflecting layer 7, and lens unit 3. The diffracting layer 6 is formed by arranging a plurality of grating grooves 6a in a row along the longitudinal direction of the substrate 2, while the extending direction of the grating groves 6a substantially coincides with a direction substantially orthogonal to the longitudinal direction of the substrate 2. The diffracting layer 6, which employs blazed gratings with sawtooth cross sections, binary gratings with rectangular cross sections, or holographic gratings with sinusoidal cross sections, for example, is formed by photocuring an optical resin for a replica such as a photocurable epoxy, acrylic, or organic/inorganic hybrid resin. The reflecting layer 7, which is shaped like a film, is formed by vapor-depositing Al, Au, or the like onto the outer surface of the diffracting layer 6, for example. Regulating the area by which the reflecting layer 7 is formed can adjust the optical NA of the spectral module 1. The passivation layer 54, which is shaped like a film, is formed by vapor-depositing MgF₂, SiOF₂, or an organic film onto the outer surfaces of the diffracting layer 6, reflecting layer 7, and lens unit 3, for example.

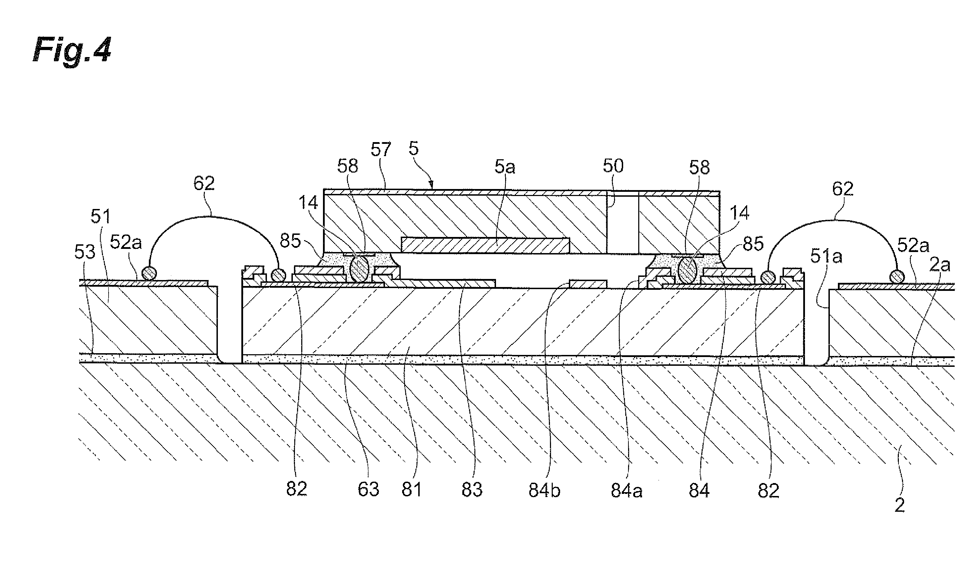

Fig. 4 is an enlarged sectional view of a main part of the spectral module of Fig. 1. As illustrated in Fig. 4, the intermediate substrate 81 is disposed within the opening 51 a of the wiring board 51 and bonded to the front face 2a of the substrate 2 with an optical resin agent 63 which transmits the light L1, L2 therethrough (i.e., the optical resin agent 63 is interposed between the front face 2a of the substrate 2 and the intermediate substrate 81). The intermediate substrate 81 is made of any of light transmitting glass materials such as BK7, Pyrex (registered trademark), and silica, plastics, and the like and transmits therethrough the light L1, L2. The volume of the intermediate substrate 81 is smaller than that of the substrate 2, whereby the heat capacity of the intermediate substrate 81 is smaller than that of the substrate 2.

The front face of the intermediate substrate 81 is provided with leads (first leads) 82 made of a metal material and an insulating layer 83 and a light absorbing layer 84 which cover the leads 82 so as to expose electrical junctions. A plurality of leads 82 are provided so as to correspond to the respective pad units 52a of the wiring board 51 and electrically connected to their corresponding pad units 52a with wires 62. Examples of the material for the insulating layer 83 include resins, SiO₂ SiN, SiON, TaO, TiO, TiN, and the like, and their multilayer films. Examples of the material for the light absorbing layer 84 include black resists, color resins (e.g., silicone, epoxy, acrylic, urethane, polyimide, and composite resins) containing fillers (e.g., carbon and oxides), metals and metal oxides of Cr, Co, and the like, their multilayer films, and porous ceramics and metals and metal oxides. The light absorbing layer 84 has a light transmitting hole 84a for transmitting the light L1 therethrough and a light transmitting hole 84b for transmitting the light L2 therethrough. The insulating layer 83 may extend into the light transmitting holes 84a, 84b of the light absorbing layer 84, so as to have a function of an optical filter.

The intermediate substrate 81 is disposed between the front face 2a of the substrate 2 and the photodetector 5 and mounted with the photodetector 5. The photodetector 5 is formed into a rectangular plate (e.g., with a full length of 5 to 10 mm, a full width of 1.5 to 3 mm, and a thickness of 10 to 100 µm), while the surface of the photodetector 5 on the spectroscopic unit 4 side is formed with a photodetecting section 5a. The photodetecting section 5a is a CCD image sensor, a PD array, a CMOS image sensor, or the like, in which a plurality of channels are arranged in a row along a direction substantially orthogonal to the extending direction of the grating grooves 6a in the spectroscopic unit 4 (i.e., along the arranging direction of the grating grooves 6a).

The photodetector 5 is formed with a light transmitting hole 50, arranged parallel with the photodetecting section 5a in the channel arrangement direction, for transmitting therethrough the light L1 proceeding to the spectroscopic unit 4. The light transmitting hole 50, which is a slit (e.g., with a length of 0.5 to 1 mm and a width of 10 to 100 µm) extending in a direction substantially orthogonal to the longitudinal direction of the substrate 2, is formed by etching or the like while being aligned with the photodetecting section 5a with high precision. A light shielding film (not depicted) is formed on the surface of the photodetector 5 opposite to the spectroscopic unit 4. This light shielding film blocks the light L1 from proceeding to the spectroscopic unit 4 without passing through the light transmitting hole 50 and from directly entering the photodetecting section 5a.

The surface of the photodetector 5 on the spectroscopic unit 4 side is provided with a plurality of electrodes 58 corresponding to the respective leads 82 of the intermediate substrate 81 and electrically connected by to their corresponding leads 82 with bumps 14 (i.e., the photodetector 5 is electrically connected to the leads 82 of the intermediate substrate 81 by facedown bonding). As a consequence, electric signals generated in the photodetecting section 5a are taken out through the electrodes 58, bumps 14, leads 82 of the intermediate substrate 81, wires 62, and leads 52 of the wiring board 51. A resin agent 85 is applied to the area between the intermediate substrate 81 and photodetector 5 excluding the optical paths of the light L1, L2 so as to cover the bumps 14.

In thus constructed spectral module 1, the light L1 enters the substrate 2 from the front face 2a side thereof through the light transmitting hole 50 of the photodetector 5, light transmitting hole 84a of the light absorbing layer 84, intermediate substrate 81, and optical resin agent 63 and advances through the substrate 2 and lens unit 3, thereby reaching the spectroscopic unit 4. The light L1 having reached the spectroscopic unit 4 is spectrally resolved by the spectroscopic unit 4 into the light L2 corresponding to a plurality of wavelengths. While being spectrally resolved, the light L2 is reflected by the spectroscopic unit 4 toward the front face 2a of the substrate 2, so as to advance through the lens unit 3 and substrate 2, thereby reaching the photodetecting section 5a of the photodetector 5 through the optical resin agent 63, intermediate substrate 81, and light transmitting hole 84b of the light absorbing layer 84. The light L2 having reached the photodetecting section 5a is detected by the photodetector 5.

A method for manufacturing the above-mentioned spectral module 1 will now be explained.

First, the substrate 2 and lens unit 3 are integrally formed by a mold, and then the lens unit 3 is formed with the spectroscopic unit 4. Specifically, a light transmitting master grating inscribed with gratings corresponding to the diffracting layer 6 is pressed against an optical resin for a replica dripped near the vertex of the lens unit 3. The optical resin for a replica is cured by irradiation with light in this state, and then preferably cured by heating for stabilization, so as to form the diffracting layer 6 having a plurality of grating grooves 6a. Thereafter, the master grating is released, A1, Au, or the like is vapor-deposited onto the outer surface of the diffracting layer 6, so as to form the reflecting layer 7, and MgF₂ or the like is further vapor-deposited onto the outer surfaces of the diffracting layer 6, reflecting layer 7, and lens unit 3, so as to form the passivation layer 54.

On the other hand, the intermediate substrate 81 provided with the leads 82, insulating layer 83, and light absorbing layer 84 and the photodetector 5 formed with the light transmitting hole 50 are prepared, and the electrodes 58 of the photodetector 5 employed as terminal electrodes are electrically connected to their corresponding leads 82 of the intermediate substrate 81 with the bumps 14. Then, the resin agent 85 is applied sideways between the intermediate substrate 81 and the photodetector 5 so as to cover the bumps 14.

Subsequently, the intermediate substrate 81 mounted with the photodetector 5 is bonded to the front face 2a of the substrate 2 with the optical resin agent 63. Further, the wiring board 51 is bonded to the front face 2a of the substrate 2 with the optical resin agent 53. Then, the leads 82 of the intermediate substrate 81 are electrically connected to their corresponding leads 52 of the wiring substrate 51 with the wires 62, so as to yield the spectral module 1.

In the spectral module 1, the photodetector 5 is mounted to the intermediate substrate 81 as explained in the foregoing, whereby the optical resin agent 63 interposed between the front face 2a of the substrate 2 and the intermediate substrate 81 is prevented from intruding into the light transmitting hole 50 of the photodetector 5. This can prevent refraction, scattering, and the like from occurring and make the light L1 appropriately enter the substrate 2 and spectroscopic unit 4.

The volume of the intermediate substrate 81 is smaller than that of the substrate 2, so that the heat capacity of the intermediate substrate 81 is smaller than that of the substrate 2 (i.e., the intermediate substrate 81 is more similar to the photodetector 5 than the substrate 2 in terms of the volume and heat capacity). Therefore, the intermediate substrate 81 expands/shrinks in a state more similar to the photodetector 5 than the substrate 2 when the temperature in the surroundings of the spectral module 1 changes. Hence, bump connections of the photodetector 5 can more reliably be prevented from breaking upon changes in the temperature in the surroundings of the spectral module 1 than when the photodector 5 is mounted to the substrate 2.

The volume of the intermediate substrate 81 is smaller than that of the substrate 2, so that the heat capacity of the intermediate substrate 81 is smaller than that of the substrate 2, whereby the intermediate substrate 81 can reach a predetermined temperature (e.g., within the range of 150°C to 200°C) faster than the substrate 2 at the time of pressing under pressure during facedown bonding of the intermediate substrate 81 and photodetector 5. Therefore, the takt time for mounting the intermediate substrate 81 with the photodetector 5 can be shortened.

Since the intermediate substrate 81 mounted with the photodetector 5 is bonded to the front face 2a of the substrate 2 with the optical resin agent 63, the photodetecting section of the photodetector 5 can be prevented from being damaged at the time of bonding. Also, the intermediate substrate 81 can strongly be pressed against the front face 2a of the substrate 2 at the time of bonding, thus making it possible to homogenize the thickness of the optical resin agent 63 and remove bubbles from within the optical resin agent 63.

The resin agent 85 is interposed between the intermediate substrate 81 and the photodetector 5 in the area excluding the optical paths of the light L 1 proceeding to the spectroscopic unit 4 and the light L2 proceeding from the spectroscopic unit 4 to the photodetecting section 5a. This can improve the connection strength between the intermediate substrate 81 and the photodetector 5 while preventing refraction, scattering, and the like from occurring in the light L1, L2, whereby bump connections of the photodetector 5 can more reliably be kept from breaking.

The wiring substrate 51 farmed with the opening 51a for placing the intermediate substrate 81 therein is bonded to the front face 2a of the substrate 2. The wiring substrate 51 can block light from proceeding to the spectroscopic unit 4 without passing through the light transmitting hole 50 of the photodetector 5 mounted to the intermediate substrate 81.

The present invention is not limited to the above-mentioned embodiment.

For example, the substrate 2 and the lens unit 3 may be formed as separate bodies and joined together by an optical resin agent or the like. In this case, a light absorbing layer having a light transmitting hole for transmitting therethrough the light L1 proceeding to the spectroscopic unit 4 and a light transmitting hole for transmitting therethrough the light L2 proceeding to the photodetecting section 5a of the photodetector 5 may be formed between the substrate 2 and the lens unit 3. This structure can restrict advancing divergent light such as to make it reach a desirable area and effectively inhibit stray light from entering the photodetector 5. Making the light transmitting holes with respective sizes different from each other can adjust the optical NA.

The lens unit 3 and the diffracting layer 6 may be integrally formed from a light transmitting low melting glass material for shaping a replica, a plastic, or the like. The bonding of the intermediate substrate 81 to the front face 2a of the substrate 2, bonding of the wiring board 51 to the front face 2a of the substrate 2, and the like may be achieved directly or indirectly through a certain layer.

### Industrial Applicability

In the spectral module, the present invention can prevent refraction, scattering, and the like from occurring and make light appropriately enter the main unit.

### Reference Signs List

1...spectral module; 2... substrate (main unit); 2a... front face (predetermined surface); 3...lens unit (main unit); 4... spectroscopic unit; 5...photodetector; 5a...photodetecting section; 50...light transmitting hole; 51...wiring board; 51a...opening; 52...lead (second lead); 63...optical resin agent; 81... intermediate substrate; 82...lead (first lead); 85...resin agent

## Claims

1. A spectral module comprising:
a main unit for transmitting light therethrough;
a spectroscopic unit for spectrally resolving light having entered the main unit from a predetermined surface side of the main unit and reflecting the light toward the predetermined surface;
a photodetector for detecting the light spectrally resolved by the spectroscopic unit;
an intermediate substrate, disposed between the predetermined surface and the photodetector, for transmitting therethrough light proceeding to the spectroscopic unit and light proceeding from the spectroscopic unit to a photodetecting section of the photodetector; and
an optical resin agent interposed between the predetermined surface and the intermediate substrate;
wherein the intermediate substrate has a volume smaller than that of the main unit; and
wherein the photodetector is formed with a light transmitting hole for transmitting therethrough the light proceeding to the spectroscopic unit, the photodetector being electrically connected by facedown bonding to a first lead provided with the intermediate substrate.

2. A spectral module according to claim 1, wherein a resin agent is disposed between the intermediate substrate and the photodetector in an area excluding optical paths of the light proceeding to the spectroscopic unit and the light proceeding from the spectroscopic unit to the photodetecting section.

3. A spectral module according to claim 1, further comprising a wiring board attached to the predetermined surface;
wherein the wiring board is formed with an opening for placing the intermediate substrate therein and provided with a second lead electrically connected to the first lead.
